Europäisches Patentamt

European Patent Office

Office européen des brevets

(19)

(11) Veröffentlichungsnummer: **0 038 912**
**B1**

# (12) EUROPÄISCHE PATENTSCHRIFT

(45) Veröffentlichungstag der Patentschrift:
18.05.83

(51) Int. Cl.³: **B 01 L 3/02**, G 01 F 23/28

(21) Anmeldenummer: **81101245.9**

(22) Anmeldetag: **21.02.81**

(54) **Sensorkanüle.**

(30) Priorität: **23.04.80 CH 3124/80**

(43) Veröffentlichungstag der Anmeldung:
**04.11.81 Patentblatt 81/44**

(45) Bekanntmachung des Hinweises auf die Patenterteilung:
**18.05.83 Patentblatt 83/20**

(84) Benannte Vertragsstaaten:
**AT CH DE FR GB IT LI NL SE**

(56) Entgegenhaltungen:
**CH-A-545 989**
**CH-A-590 472**
**DE-A-1 938 032**
**DE-A-1 961 342**
**DE-B-1 118 480**
**US-A-3 434 513**
**US-A-4 053 002**

**L. MERZ, «Grundkurs der Regelungstechnik», 1963, R. Oldenburg, München, Seiten A/1 und A/2**

(73) Patentinhaber: **CONTRAVES AG,**
**Schaffhauserstrasse 580, CH-8052 Zürich (CH)**

(72) Erfinder: **Lorenz, Adrian, Dr., Voltastrasse 33,**
**CH-8044 Zürich (CH)**

ACTORUM AG

Sensorkanüle

Die Erfindung betrifft eine Sensorkanüle zur selbsttätigen Entnahme einer Probe aus einer in einem Gefäss vorliegenden Flüssigkeit, welche ihre Lage bezüglich der unbekannten Flüssigkeitsoberfläche selbsttätig einstellt.

Wenn zahlreiche Flüssigkeitsproben mit gleichbleibender Genauigkeit gezogen werden müssen, oder wenn die Entnahmestelle schwer zugänglich ist, wird die Probenahme vorteilhaft durch einen Automaten durchgeführt. Eine selbsttätige Probenahme ist aber auch dort unerlässlich, wo eine manuelle Entnahme das mit der Aufgabe vertraute Personal durch Strahlung oder chemische Einflüsse gefährden würde.

Neben einer zuverlässigen Arbeitsweise wird von einer Sensorkanüle verlangt, dass sie die Flüssigkeitsproben nicht verändert, etwa durch elektrische Einwirkungen, und dass sie selbst durch die Probenflüssigkeit in ihrer Funktionsfähigkeit möglichst wenig beeinträchtigt wird.

Zur Durchführung dieser Aufgabe werden Sensorkanülen eingesetzt, welche die Lage einer Flüssigkeitsoberfläche durch die Änderung einer gemessenen physikalischen Grösse detektieren, und mit einer Absaugvorrichtung in einer bestimmten Eintauchtiefe eine Probenmenge ziehen.

So ist durch die FR-A-7 425 840 eine Sensorkanüle bekannt, welche die Flüssigkeitsoberfläche durch Druckänderungen eines Gasstromes anzeigt. Dazu wird parallel zu einer Probenkanüle ein Rohr geführt, dessen Öffnung im Abstand zur Öffnung der Probenkanüle angebracht ist. Das durch das Rohr strömende Gas ändert beim Eintauchen der Rohröffnung in die Flüssigkeit seinen Druck, der von einem Messgerät bestimmt wird und das aufgrund der Messresultate die Probenahme steuert.

Diese Sensorkanüle und der dazu erforderliche Aufbau für die Messung, Regelung und Lagerung des Gases bedingt eine voluminöse Vorrichtung, die nicht in einer vorteilhaften Kleinausführung gebaut werden kann. Weiter nachteilig ist der unerwünschte Arbeitsaufwand durch das Nachfüllen oder Auswechseln der Gasbehälter.

Weiter sind Sensorkanülen bekannt, bei denen Kapazitäten und Induktivitäten sowie ihre Änderungen beim Eintauchen in die Probenflüssigkeit zur Steuerung der Probenahme verwendet werden. Auch bei diesen Methoden ist die gewünschte Miniaturisierung der Sensorkanüle nicht durchführbar, und ausserdem eine nachteilige Verkoppelung der Sensorelektronik mit der Sensorzone erforderlich.

Der Erfindung liegt deshalb die Aufgabe zugrunde, eine Sensorkanüle der eingangs genannten Art zu schaffen, die kostengünstig und in räumlich kleiner Ausführung gebaut werden kann. Mit einer solchen Sensorkanüle soll eine Probenahme auch bei geneigten und schwer zugänglichen Flüssigkeitsoberflächen, wie sie etwa in Zentrifugen vorkommen, selbsttätig und zuverlässig durchführbar sein.

Die Aufgabe wird erfindungsgemäss dadurch gelöst, dass ein hohler, lichtleitender Stab vorgesehen ist, der die Kanüle mantelartig umgibt, und der bei jeder Probenahme die Änderung des Reflexionsverhaltens des unteren Endes bei seinem Eintauchen in die Flüssigkeit zur Positionierung der Kanüle benützt.

Die erfindungsgemässe Sensorkanüle hat den weiteren Vorteil, dass die Sensorelektronik durch die optische Signalübertragung von der Sensorzone entkoppelt ist.

Im folgenden wird anhand der Zeichnung die Ausführung der Erfindung näher beschrieben.

Es zeigen:

Fig. 1 eine im Schnitt dargestellte Ansicht einer Sensorkanüle sowie die schematisch gezeichneten Baugruppen des Regelkreises,

Fig. 2 eine im Schnitt dargestellte Ansicht eines Teils der Sensorkanüle sowie ein Gefäss mit einer Flüssigkeit,

Fig. 3 eine im Schnitt dargestellte Ansicht der in die Flüssigkeit eingetauchten Sensorkanüle.

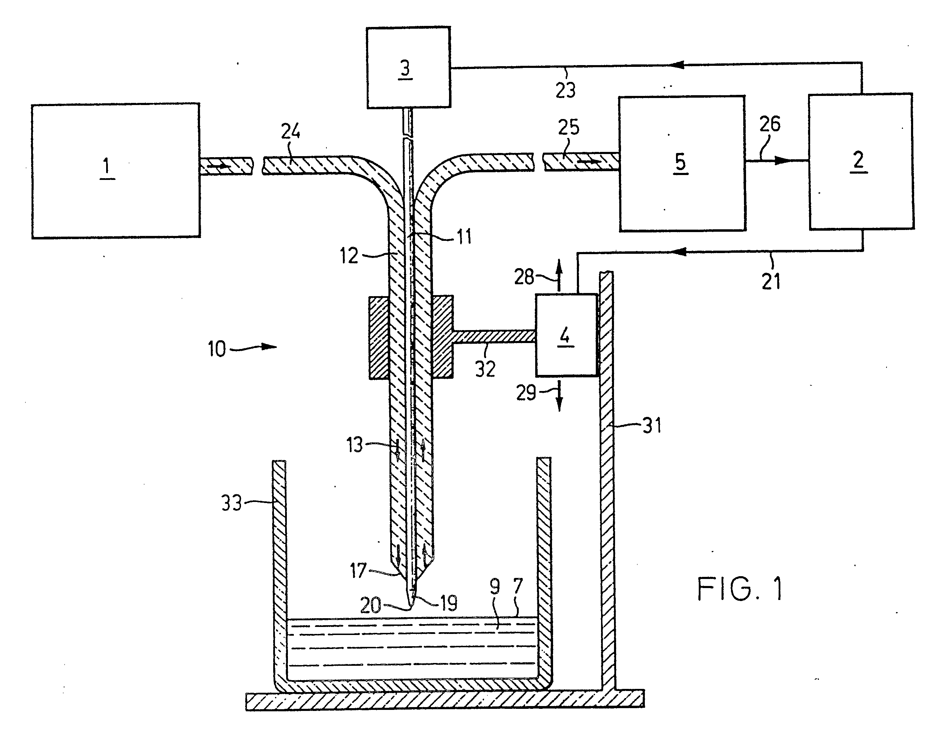

Fig. 1 zeigt die Sensorkanüle 10 im Schnitt, sowie schematisch eine Lichtquelle 1, einen Regler 2, eine Ansaugvorrichtung 3, einen Antrieb 4, einen Lichtdetektor 5 sowie eine Kanüle 11 in der Seitenansicht. Die Lichtquelle 1 überträgt in bekannter Weise Licht auf den durch Splittung entstandenen Ast 24 des lichtleitenden Stabes 12. Ohne wesentliche Intensitätsverluste und ungeachtet der Krümmungen des Stabes wird das Licht 13 bis zur Fläche 17 geleitet, wo es je nach der optischen Dichte des umgebenden Mediums aus dem lichtleitenden Stab 12 austritt oder durch Reflexion zurückgeleitet wird. An der Austrittsstelle des zweiten Astes 25 des gesplitteten Stabes misst ein Detektor 5 die Intensität des hier austretenden Lichts. Der Detektor 5 gibt den gemessenen Wert als Signal über die Leitung 26 an den Regler 2 weiter, der über die Leitung 21 den Antrieb 4 in den beiden Bewegungsrichtungen 28 und 29 und über die Leitung 23 die Ansaugvorrichtung 3 regelt.

Die Sensorkanüle 10 ist mit der Halterung 32 am Antrieb 4 befestigt, welcher entlang der Schiene 31 in den beiden Richtungen 28 und 29 bewegt werden kann. Die Probenflüssigkeit 9 mit der Flüssigkeitsoberfläche 7 liegt in dem schematisch gezeichneten Gefäss 33 vor, das beispielsweise ein Vollblutröhrchen oder ein Behälter einer Zentrifuge sein kann.

Die Fläche 17 ist vorzugsweise konisch ausgebildet und etwa 45° zur Kanülenachse geneigt. Das untere Ende des Lichtleiters 12 kann jedoch auch kegelförmig, prismatisch oder keilförmig ausgebildet sein. Die Kanülenspitze 19 ragt über die Fläche 17 hinaus und weist am vorderen Ende eine Kanülenöffnung 20 auf.

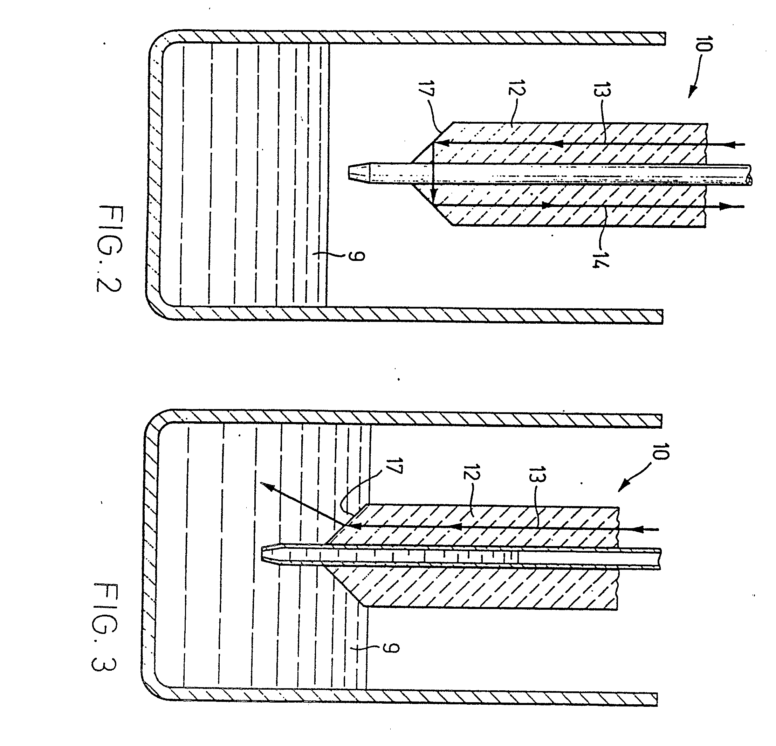

Fig. 2 zeigt die Verhältnisse bei nicht in die Flüssigkeit 9 eingetauchter Sensorkanüle 10. Der von der Quelle 1 (Fig. 1) auf den lichtleitenden Stab 12 übertragene Lichtstrahl 13 wird auf bekannte Weise bis zur Fläche 17 geleitet. Da die umgebende Luft eine kleinere optische Dichte hat als der lichtleitende Stab, wird der Lichtstrahl an der Fläche 17 reflektiert und in der Richtung 14 zum Detektor 5 geleitet.

Fig. 3 zeigt die Verhältnisse bei eingetauchter Sensorkanüle 10. Die Fläche 17 ist in die Flüssigkeit 9 eingetaucht und dadurch von einem Medium umgeben, das eine ähnliche optische Dichte aufweist wie der lichtleitende Stab. Der von der Quelle 1 auf die Fläche 17 einfallende Lichtstrahl 13 wird gebrochen und tritt in die Flüssigkeit 9 aus. Der Detektor 5 (Fig.1) misst deshalb bei eingetauchter Fläche 17 kein oder nur sehr wenig Licht.

## Patentanspruch

Sensorkanüle (10) zur selbsttätigen Entnahme einer Probe aus einer in einem Gefäss (33) vorliegenden Flüssigkeit (9), welche ihre Lage bezüglich der unbekannten Flüssigkeitsoberfläche (7) selbsttätig einstellt, dadurch gekennzeichnet, dass ein hohler, lichtleitender Stab (12) vorgesehen ist, der die Kanüle (11) mantelartig umgibt, und der bei jeder Probenahme die Änderung des Reflexionsverhaltens des unteren Endes bei seinem Eintauchen in die Flüssigkeit (9) zur Positionierung der Kanüle benützt.

## Claim

Canula with sensing means (10) for the automatic withdrawal of a sample from a liquid (9) contained in a vessel (33), which canula automatically adjusts its position with respect to the unknown surface (7) of the liquid, characterized in that there is provided a hollow, light-conducting rod (12) surrounding the canula (11) in a sheath-like fashion and that the change in the light reflexion behaviour of its lower end upon immersion into the liquid (9) is employed for adjusting the position of the canula during each sample withdrawal.

## Revendications

Canule pourvue de moyens détecteurs (10) pour la prise automatique d'un échantillon d'un liquide (9) contenu dans un récipient (33), cette canule ajustant automatiquement sa position par rapport à la surface (7) inconnue du liquide, caractérisé en ce qu'il est prévu une tige (12) creuse, conductrice de la lumière, entourant la canule (11) à la manière d'un manteau, et que le changement de comportement de réflexion de la lumière de son extrémité inférieure lorsque celle-ci s'immerge dans le liquide (9) est utilisé pour ajuster la position de la canule à chaque prise d'échantillon.

FIG. 1

0 038 912

FIG. 2

FIG. 3